# EUROPÄISCHE PATENTANMELDUNG

(11) **EP 2 801 789 A1**
(43) Veröffentlichungstag der Anmeldung: **12.11.2014**
(21) Anmeldenummer: 14167011.7
(22) Anmeldetag: 05.05.2014
(51) Int. Cl.: G01B 11/27

(54) **Vorrichtung zum Ermitteln der Lage von mechanischen Elementen**

(30) Priorität: 06.05.2013 DE 102013007661
(71) Anmelder: Prüftechnik Dieter Busch AG, 85737 Ismaning (DE)
(72) Erfinder: Hölzl, Roland, 81369 München (DE)

(57) **Zusammenfassung**

Die Erfindung betrifft eine Vorichtung zum Ermitteln der Lage eines ersten mechanischen Elements (10, 156) und eines zweiten mechanischen Elements (12, 154) zueinander, mit einer ersten Messeinheit (14, 114, 214) zum Ansetzen an das erste mechanische Element, einer zweiten Messeinheit (18, 118, 218) zum Ansetzen an das zweite mechanische Element, sowie einer Auswerteeinheit (22), wobei die erste Messeinheit Mittel (24, 124, 224) zum Erzeugen eines Lichtstrahlbündels (28, 128, 228) aufweist, wobei die zweite Messeinheit eine Streufläche (34, 134, 234) zum Streuen von auf die Streufläche auftreffendem Licht, eine Kamera (36) sowie Mittel aufweist, um die Streufläche auf die Kamera abzubilden, wobei die Streufläche der ersten Messeinheit zugewandt ist, wenn die Messeinheiten an das jeweilige mechanische Element angesetzt sind, um von dem Lichtstrahlbündel getroffen zu werden, wobei die Auswerteeinheit ausgebildet ist, um aus von der Kamera gelieferten Bilddaten die Auftreffposition des von der ersten Messeinheit abgegebenen Lichtstrahlbündels auf der Streufläche und daraus die Lage des ersten mechanischen Elements und des zweiten mechanischen Elements zueinander zu ermitteln, und wobei die Kamera auf die der ersten Messeinheit zugewandte Seite der Streufläche gerichtet ist.

## Beschreibung

Die Erfindung betrifft eine Vorrichtung zum Ermitteln der Lage eines ersten und eines zweiten mechanischen Elements zueinander, mit einer ersten Messeinheit zum Ansetzen an das erste mechanische Element und einer zweiten Messeinheit zum Ansetzen an das zweite mechanische Element sowie einer Auswerteeinheit, wobei mindestens einer der beiden Messeinheiten eine Lichtquelle zum Erzeugen eines Lichtstrahls aufweist, dessen Auftreffpunkt auf mindestens einer Fläche an der anderen Messeinheit ermittelt wird.

Einer solche Vorrichtung kann beispielsweise zum Ermitteln der Ausrichtung von zwei Wellen zueinander, zum Ermitteln der Geradheit bzw. fluchtenden Ausrichtung von Bohrungen, zum Ermitteln der Geradheit von Kanten oder zur Niveauermittlung von verschiedenen Punkten einer Fläche ausgebildet sein.

Typischerweise wird zum Ermitteln der Ausrichtung von Wellen zudeinander die Lage des Auftreffpunkts des Lichtstrahls in mehreren Rotationswinkel-Positionen ermittelt, wozu die Messeinheiten entlang der Umfangsflächen der Wellen verschoben werden oder die Wellen mit den an die Umfangsflächgen angesetzten Messeinheiten gedreht werden.

In der DE 33 35 336 A1 ist eine Wellenausrichtungs-Messvorrichtung beschrieben, bei welcher sowohl die erste als auch die zweite Messeinheit jeweils einen Lichtstrahl aussenden und einen optischen Detektor aufweisen, wobei der Lichtstrahl jeweils auf den Detektor der anderen Messeinheit gerichtet wird.

Eine nach diesem Prinzip arbeitende Wellenausrichtungs-Messvorrichtung ist auch in der US 6,873,931 B1 beschrieben, wobei die beiden Messeinheiten jeweils mit zwei zweiachsigen Beschleunigunsgsensoren zur automatischen Erfassung des Drehwinkels der Welle versehen sind.

Aus der DE 38 14 466 A1 ist eine Wellenausrichtungs-Messvorrichtung bekannt, bei welcher die erste Messeinheit einen Lichtstrahl aussendet, der auf zwei in axialer Richtung hintereinander angeordnete optische Detektoren der zweiten Messeinheit fällt.

Aus der WO 03/067187 A1 ist eine Wellenausrichtungs-Messvorrichtung bekannt, bei welcher die erste Messeinheit einen fächerförmigen Strahl aussendet, der auf zwei in axialer Richtung hintereinander angeordnete optische Detektoren der zweiten Messeinheit fällt.

Aus der WO 00/28275 A1 ist eine Wellenausrichtungs-Messvorrichtung bekannt, bei welcher zwei Messeinheiten an jeweils eine Stirnseite der beiden Wellen angebracht werden, wobei die erste Messeinheit einen fächerförmigen Lichtstrahl aussendet, der drei in einer Ebene der zweiten Messvorrichtung angeordnete Markierungsstifte seitlich trifft.

In der EP 2 093 537 A1 ist Wellenausrichtungs-Messvorrichtung beschrieben, bei welcher die erste Messeinheit einen aufgefächerten Lichtstrahl aussendet, der auf zwei seitlich in Abstand zueinander parallel angeordnete optische Streifendetektoren der zweiten Messeinheit fällt, wobei die Längsrichtung der Detektoren senkrecht zu der Fächerebene des Lichtstrahls angeordnet ist.

In der EP 0 543 971 B1 ist eine Vorrichtung zum Ermitteln der Ausrichtung einer Turbinenbohrung bzgl. einer Bezugsachse beschrieben, wobei ein die Bezugsachse repräsentierender Laserstrahl auf einen zweiachsigen optischen Detektor gerichtet wird, der einen Fuß aufweist, der an der Bohrungswand angesetzt wird und enlang dieser in Umfangsrichtung verschoben wird, um den Auftreffpunkt des Lasers bei mehreren Drehwinkeln zu ermitteln.

In der US 2007/0201040 A1 ist eine Vorrichtung zum Ermitteln des Niveaus mehrere Messpunkte auf einer Fläche beschrieben, wobei ein in einer horizontalen Ebene mit konstanter Winkelgeschwindigkeit umlaufender Laserstrahl auf einen an den jeweiligen Messpunkt angesetzten zweiachsigen optischen Detektor gerichtet wird, um aus der vertikalen Komponente des Auftreffpunkts die Höhe des Messpunkts und aus Zeitpunkt und Zeitdauer des horizontalen Überstreichens des Detektors den Winkel und den Abstand des Messpunkts bezüglich der Laserquelle zu ermitteln. Eine ähnliche Vorrichtung ist in der EP 1 473 540 A1 beschrieben, wobei der Laserstrahl mittels eines rotierenden Pentagonalprismas auf den Detektor gerichtet wird und ein Drehwinkel abhängiges Intensitätsprofil aufweist, anhand dessen der Winkel des Messpunkts bestimmt werden kann.

Bei allen hier gewürdigten Messvorrichtungen wird jeweils der Auftreffpunkt eines Lichtstrahls auf einer Detektorfläche ermittelt und ausgewertet.

Aus der DE 40 41 723 A1 ist eine Vorrichtung zur Bestimmung der Position eines Messpunkts relativ zu einem Bezugspunkt zur Steuerung oder Kontrolle des Vortriebs einer Bohrung bekannt, welche mehrere Messstationen aufweist, die in der Bohrung bzw. am Bohrkopf angeordnet sind und jeweils eine Kamera mit einer Markierung aufweisen, wobei jede Kamera die Markierung der benachbarten Kamera bzw. Messstation aufnimmt.

Aus der WO 2010/042039 A1 ist eine Wellenausrichtungsmessvorrichtung bekannt, bei welcher jede der beiden Messeinheiten mit einer in einem Gehäuse angeordneten Kamera versehen ist, wobei die der anderen Einheit zugewandte Gehäuseseite mit einem optischen Muster versehen ist, welches von der gegenüberliegende Kamera aufgenommen wird. Die mit dem Muster versehene Gehäuseseite ist dabei jeweils mit einer Öffnung versehen, durch welche das gegenüberliegende Muster abgebildet wird. Bei einer alternativen Ausführung ist eine der beiden Einheiten nur mit einer Kamera, nicht aber mit einem Muster versehen, während die andere Einheit keine Kamera aufweist, jedoch mit einem dreidimensionalen Muster versehen ist.

In der EP 1 211 480 A2 ist eine Wellenausrichtungsmessvorrichtung beschrieben, bei welcher die erste Messeinheit mit einer Lichtquelle versehen ist, welche einen Lichtstrahl auf die mit einer Mattscheibe versehenen zweiten Messeinheit richtet; die der ersten Messeinheit abgewandte Seite der Mattscheibe wird mittels einer entsprechenden Optik auf einen ebenfalls Teil der zweiten Messeinheit bildenden Bilddetektor abgebildet.

In der DE 101 43 812 A1 und der DE 101 17 390 A1 ist eine Wellenausrichtungsmessvorrichtung beschrieben, bei welcher die erste Messeinheit eine Lichtquelle zum Erzeugen eines aufgefächerten Strahls aufweist und die gegenüberliegende zweite Messeinheit ein teilreflektierendes optisches System mit rückwärtiger Mattscheibe sowie eine Kamera aufweist, die die der ersten Messeinheit abgewandte Seite der Mattscheibe mit einem primären Lichtfleck des direkt von der Lichtquelle kommenden Strahls und mit einem sekundären Lichtfleck des von dem teilreflektierenden optischen System der zweiten Messeinheit und einem Reflektor an der Stirnseite der ersten Messeinheit reflektierten Strahls aufnimmt.

Von der Firma Wente CamSorik GmbH, 38108 Braunschweig, Deutschland, ist unter der Bezeichnung LaserTrac ein Laserempfänger mit Kamera für Maschinenvermessung erhältlich.

Es ist Aufgabe der vorliegenden Erfindung, eine Vorrichtung zum Ermitteln der Lage zweier mechanischer Elemente zueinander, beispielsweise zur Wellenausrichtungsmessung, zu schaffen, welche besonders einfach, flexibel und kostengünstig ausgebildet ist. Ferner soll ein entsprechendes Verfahren geschaffen werden.

Diese Aufgabe wird erfindungsgemäß gelöst durch eine Vorrichtung gemäß Anspruch 1 bzw. Anspruch 8 sowie durch ein Verfahren gemäß Anspruch 23 bzw. 26.

Bei der erfindungsgemäßen Lösung ist vorteilhaft, dass durch die Verwendung einer Kamera und einer Streufläche, welche auf die Kamera abgebildet wird, anstelle der Verwendung eines optischen Detektors, auf welchen das reflektierte Lichtstrahlbündel direkt auftrifft, ein besonders einfaches und flexibles System realisiert werden kann. Insbesondere kann als Kamera ein für Endverbraucher konzipiertes Massenprodukt, wie beispielsweise eine fotografische Kamera oder ein Smartphone, die relativ kostengünstig erhältlich sind oder ohnehin aus anderen Gründen bereits beim Anwender vorhanden sind, verwendet werden.

Gemäß einer Ausführungsform der Erfindung ist die Kamera bezüglich der beiden Messeinheiten frei beweglich und kann beispielsweise freihand verwendet werden, um die Streufläche auf die Kamera abzubilden. Gemäß einer alternativen Ausführungsform kann die Kamera als Teil der Messeinheit, welche auf die Mittel zum Erzeugen des Lichtstrahlenbündels aufweist, ausgebildet sein oder an dieser Messeinheit angebracht sein.

Die Erfindung kann insbesondere zum Ermitteln der Ausrichtung von zwei Wellen zueinander, zum Ermitteln der Geradheit bzw. fluchtenden Ausrichtung von Bohrungen, zum Ermitteln der Geradheit von Kanten oder zur Niveauermittlung von verschiedenen Punkten einer Fläche verwendet werden.

Bevorzugte Ausgestaltungen der Erfindung ergeben sich aus den Unteransprüchen.

Im Folgenden wird die Erfindung beispielhaft anhand der beigefügten Zeichnungen näher erläutert. Dabei zeigen:
- Fig. 1: eine seitliche, leicht perspektivische Ansicht eines ersten Beispiels einer erfindungsgemäßen Lageermittlungsvorrichtung;
- Fig. 2: eine Frontansicht der Streufläche der Vorrichtung von Fig. 1;
- Fig. 3: eine perspektivische Ansicht der mit der Streufläche versehenen Messeinheit der Vorrichtung von Fig. 1 im praktischen Einsatz;
- Fig. 4: eine schematische Darstellung, wie unter Verwendung des Strahlensatzes eine perspektivische Verzerrung des Abbilds der Streufläche auf der Kamera korrigiert werden kann;
- Fig. 5: eine Längsschnittansicht eines Turbinenstators, der mittels einer erfindungsgemäßen Vorrichtung vermessen wird;
- Fig. 6: eine an die Innenwand anzusetzende Messeinheit der Vorrichtung von Fig. 5 in Frontal- und Seitenansicht;
- Fig. 7: ein Beispiel der Verwendung einer erfindungsgemäßen Messvorrichtung bei einer Niveaumessung;
- Fig. 8: Beispiele von mit der Vorrichtung von Fig. 7 aufgenommenen Bildern; und
- Fig. 9: ein Beispiel einer mit vier QR-Codes versehenen Streufläche.

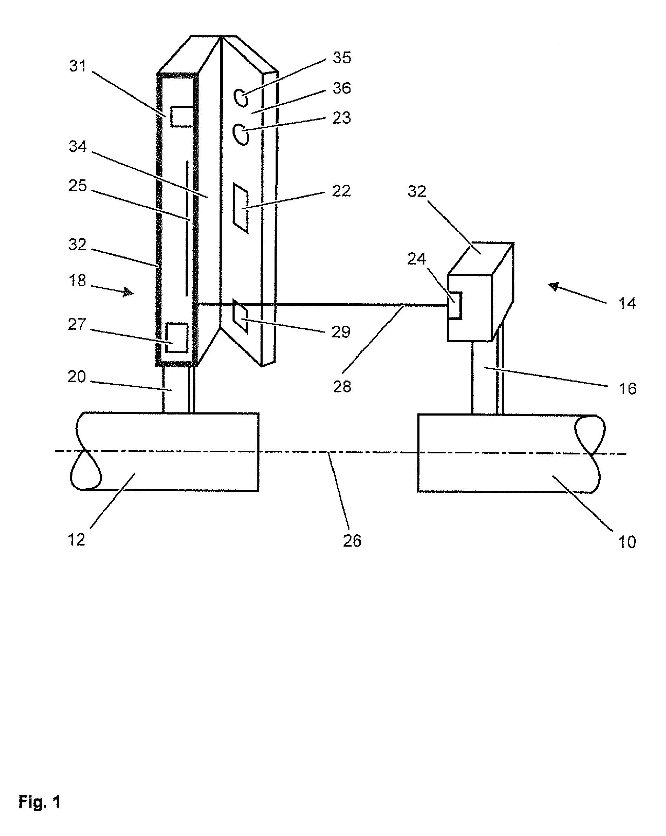

In den Fig. 1 bis 3 ist ein erstes Beispiel einer erfindungsgemäßen Vorrichtung zur Ermittlung der Ausrichtung einer ersten Welle 10 einer (nicht gezeigten) Maschine und einer zweiten Welle 12 einer (nicht gezeigten) Maschine zueinander gezeigt. Die Vorrichtung umfasst eine erste Messeinheit 14 mit einem Element 16 zum Ansetzen an eine Umfangsfläche der ersten Welle 10 sowie eine zweite Messeinheit 18 mit einem Element 20 zum Ansetzen an die Umfangsfläche der zweiten Welle 12.

Die beiden Wellen 10 und 12 sind möglichst fluchtend hintereinander bezüglich einer Referenzachse 26 angeordnet, wobei die Vorrichtung mit den beiden Messeinheiten 14, 18 dazu dient, einen eventuellen Winkelversatz und/oder Parallelversatz bezüglich der Referenzachse 26 bzw. relativ zueinander zu bestimmen. Die Vorrichtung umfasst typischerweise auch Mittel zum Anzeigen des Ergebnisses bezüglich Winkelversatz bzw. Parallelversatz (in den Figuren nicht dargestellt).

Die erste Messeinheit 14 umfasst eine Lichtquelle 24 zum Erzeugen eines Lichtstrahlenbündels 28 und einen Kollimator (nicht dargestellt) zum Kollimieren des Lichtstrahlenbündels 28.

Die zweite Messeinheit 18 umfasst eine Streufläche 34 sowie eine Kamera 36 zur Aufnahme von Bildern der Streufläche 34 auf.

Die Kamera 36 weist eine Optik 35 auf, um die Streufläche 34 auf einen Kamerasensor (nicht dargestellt) abzubilden. Die Kamera 36 kann dabei beispielsweise seitlich schräg zur Streufläche 34 angebracht sein, um das Auftreffen eines an der ersten Messeinheit 18 ausgesandten Lichtstrahls zumindest im zentralen Bereich der Streufläche 34 nicht zu behindern.

Die Streufläche 34 ist der ersten Messeinheit 14 zugewandt, wenn sich die beiden Messeinheiten 14, 18 in einer Messposition befinden.

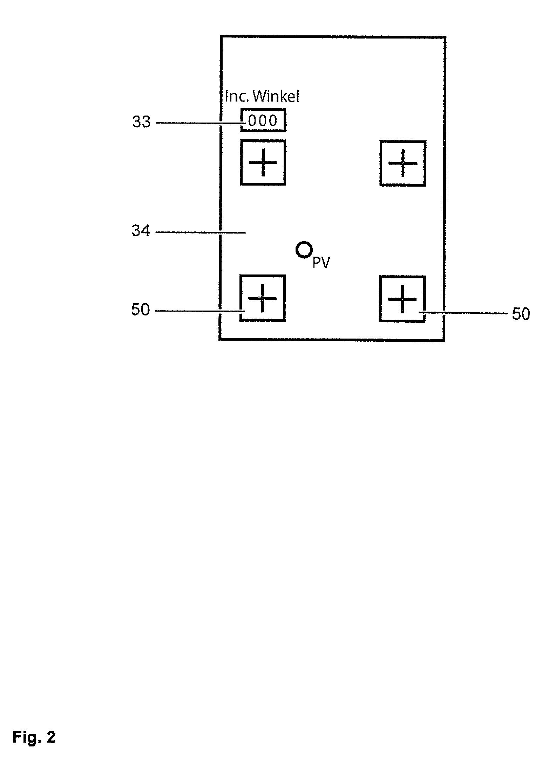

Im Beispiel von Fig. 1 und 2 ist der Auftreffpunkt (d.h. der Lichtfleck) des Lichtstrahlbündels 28 auf der Streufläche 34 mit PV bezeichnet.

Die erste Messeinheit 14 weist ein Gehäuse 32, auf welches die Lichtquelle 24 und die zugehörige Elektronik enthält. Die Lichtquelle 24 ist vorzugsweise zufällig ("randomized") gepulst, um die Schwingungsanfälligkeit gering zu halten. Ferner enthält das Gehäuse 32 die Stromquelle (Batterien oder Akkus) für die Lichtquelle 24, nebst geeigneter Power-Management-Elektronik. Insgesamt sollte das Gehäuse 32 nicht wesentlich dicker als die typischerweise zur Anbindung an das Ansetzelement 16 vorgesehenen Haltestangen (in Fig. 1 nicht gezeigt) sein.

Hinter der Streufläche 34 (von der ersten Messeinheit 14 aus gesehen) weist die zweite Messeinheit 18 ein Gehäuse 27 auf, welches beispielsweise ein Inklinometer 31 aufnehmen kann, um den Neigungswinkel der zweiten Messeinheit 18 und damit die Drehwinkelposition der mit der zweiten Messeinheit 18 versehenen Welle 10 zu bestimmen. Ein solches Inklinometer 31 mit einer Anzeige 33 kann beispielsweise in das Gehäuse 27 integriert sein, siehe Fig. 1 und 2. Das Inklinometer 31 kann dabei beispielsweise als MEMS-Inklinometer ausgebildet sein.

Die erste Messeinheit 14 ist vorzugsweise so ausgebildet, dass das Lichtstrahlenbündel 28 direkt ohne Zwischenschaltung eines reflektierenden Elements auf die Streufläche 34 der zweiten Messeinheit 18 gerichtet werden kann, d.h. zwischen der Lichtquelle 24 und der Streufläche 34 sind keine reflektierenden Elemente angeordnet.

Gemäß Fig. 2 ist die Streufläche 34 mit Messmarkierungen 50 versehen, die beispielsweise als Kreuze ausgebildet sein können, um die Auswertung der von der Kamera 36 aufgenommenen Bilder der Streufläche 34 zu erleichtern. Damit die Markierungen 50 auch in dunkler Umgebung sichtbar sind, kann beispielsweise eine externe Lichtquelle vorgesehen sein, z.B. eine LED 23 an der Kamera 36. Alternativ könnte eine Hintergrundbeleuchtung 25 der Streufläche 34 vorgesehen sein. Dabei könnte z.B. eine Metallfolie mit entsprechenden Ausschnitten auf eine Milchglasfläche (aus Glas oder Kunststoff) geklebt sein, wobei dann über das Gehäuse 32 diffuses weißes Licht eingekoppelt wird.

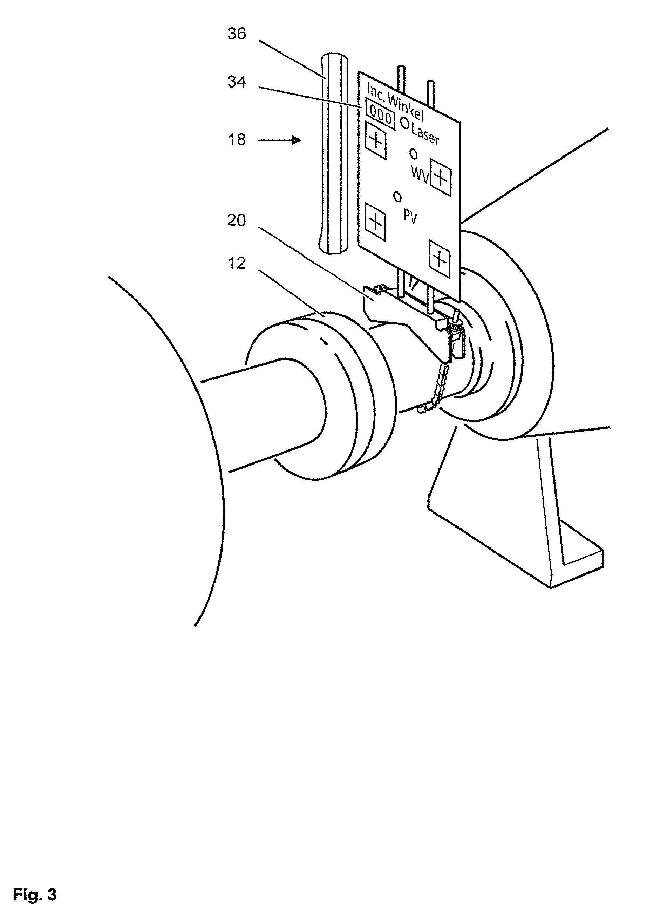

Vorzugsweise ist die Streufläche 34 im Wesentlichen eben ausgebildet. Gemäß Fig. 1 und 3 kann die Kamera 36 seitlich versetzt und verkippt bezüglich der Streufläche 34 angeordnet sein. Dabei kann die Kamera 36 beispielsweise auch unten an dem Ansetzelement 16 (bei dem es sich beispielsweise um eine Kettenspannvorrichtung handeln kann) montiert sein. Die Kamera 36 ist dabei so ausgerichtet, dass sie die Streufläche 34 möglichst vollständig auf dem Kamerasensor abbildet, jedoch das Lichtstrahlenbündel 28 nicht abgeschattet wird. Dabei könnte zusätzlich noch eine Streulichtblende (nicht gezeigt) vorgesehen sein, welche vorteilhaft auch zur mechanischen Stabilisierung der Kamera 36 und der Streufläche 34 verwendet werden könnte.

Die Kamera 36 kann beispielsweise als Kompaktkamera oder als Smartphone bzw. Mobiltelefonkamera ausgebildet sein. Vorzugsweise handelt es sich bei der Optik 35 um ein Festobjektiv, da ein solches stabiler ist als ein Zoomobjektiv. Vorzugsweise liegt die Auflösung des Kamerasensors bei mindestens 8 Megapixel. Die Kamera wird vorzugsweise im Makrobereich betrieben.

Sofern die Kamera als Smartphone ausgebildet ist, kann die Anzeige des Smartphones vorteilhafterweise als graphische Benutzeroberfläche (GUI) verwendet werden; ansonsten könnte ein zusätzliches Gerät in dieser Art wie beispielsweise ein Smartphone oder ein Tablet-Computer, zusätzlich zur Bedienerführung verwendet werden. Dabei kann beispielsweise auch eine Sprachsteuerung mit Headset oder der für 2013 zu erwartenden "Google-Brille ("GLASS") eingesetzt werden.

Bei der Auswertung der von der Kamera aufgenommenen Bilder kann wie folgt vorgegangen werden: Ziel der Auswertung ist es, die Mittelpunktkoordinaten des Auftreffpunkts PV der Lichtstrahlbündels 28 zu bestimmen. Dabei wird das aufgenommene Bild zunächst entzerrt, d.h. die durch die seitlich verkippte Anordnung der Kamera 36 verursachte perspektivische Verzerrung und Verzerrungen des optischen Systems sollen kompensiert werden. Dies kann beispielsweise anhand der Messmarken 50 erfolgen, deren "Weltkoordinaten" exakt bekannt sind. Der Auftrefffleck der Lichtstrahlenbündel 28 kann anhand der Farbe vom Hintergrund separiert werden, so dass das Gebiet für die Mittelpunktsbestimmung eingeschränkt wird. Danach erfolgt die Mittelpunktsbestimmung mittels einer Schwerpunktabschätzung. Da die Weltkoordinaten der Messmarken 50 exakt bekannt sind, kann auf Pixelkoordinaten umgerechnet werden, so dass der Mittelpunkt der Lichtstrahlbündelauftreffpunkte WV und PV in Weltkoordinaten bestimmt werden kann.

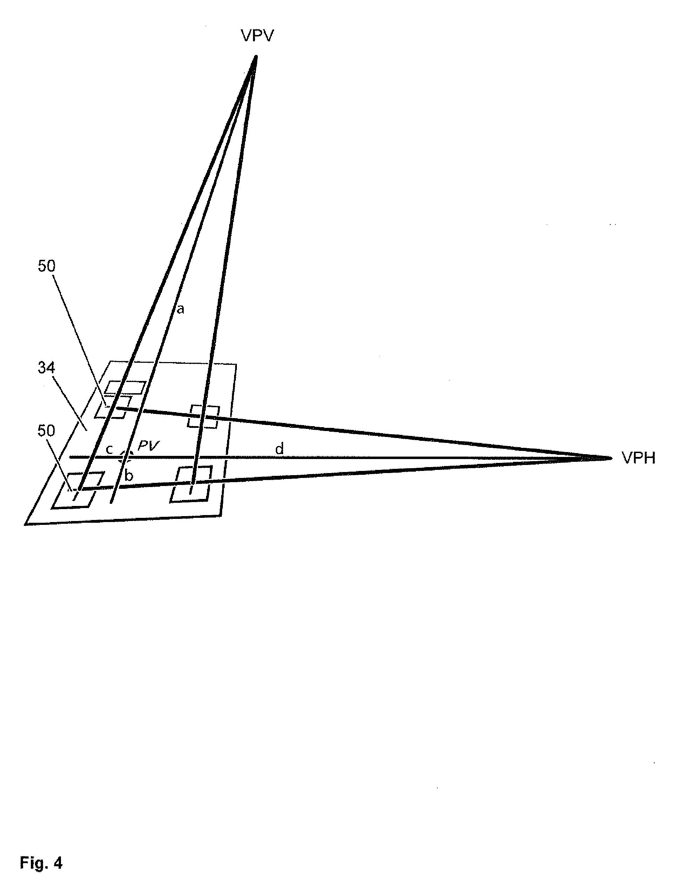

Eine andere Möglichkeit ist die Anwendung des Strahlensatzes zur Berechnung der Koordinaten der Auftreffpunkte, wie dies in Fig. 4 für den Auftreffpunkt PV schematisch angedeutet ist. Dabei wird mit dem horizontalen Fluchtpunkt VPH und dem vertikalen Fluchtpunkt VPV gearbeitet.

Auch der mittlere Durchmesser des Lichtstrahlbündelauftreffpunkts PV kann ermittelt werden und zu einer Abschätzung des Abstands zwischen Lichtquelle 24 und Streufläche 34, d.h. zwischen der ersten Messeinheit 14 und der zweiten Messeinheit 18, herangezogen werden.

Sofern die zweite Messeinheit 18 mit einer Anzeige 33 für den von einem Inklinometer 31 gemessenen Neigungswinkel aufweist, ist die Kamera 36 vorzugsweise mit einer OCR-Funktion versehen, um den Wert dieses Winkels zu erfassen; alternativ kann eine Übertragung des Winkelwerts direkt zur Kamera 36 erfolgen, beispielsweise über eine Bluetooth-Strecke.

Sofern es sich bei der Kamera 36 um ein Smartphone handelt, kann auch das darin üblicherweise integrierte Inklinometer 29 für die Bestimmung des Neigungswinkels verwendet werden.

Die Auswertung der Bilder kann in einer schematisch bei 22 angedeuteten Auswerteeinheit erfolgen, die Teil der Kamera bilden kann, insbesondere wenn es sich um ein Smartphone handelt, das ja ohnehin bereits von Haus aus mit einer relativ großen Rechenleistung ausgestattet ist.

Vor Beginn einer Messung werden die beiden Messeinheiten 14, 18 zunächst relativ zueinander justiert, so dass das Lichtstrahlbündel 28 in etwa in der Mitte der Streufläche 34 auftrifft. Zu diesem Zweck kann beispielsweise die erste Messeinheit 14 mit einer Höhenverstellung (nicht gezeigt) zum Verstellen der Position der erste Messeinheit 14 in radialer Richtung bezüglich der Welle 10 und einer Winkelverstellung zwecks Verkippung der erste Messeinheit 14 bezüglich der radialen Richtung der Welle 10 und einer Verstellung der erste Messeinheit 14 um die radiale Richtung versehen sein.

Nach erfolgter Justierung der beiden Messeinheiten 14, 18 zueinander kann aus der Auftreffposition des Strahlenbündels 28 auf die Fehlausrichtung der beiden Wellen 10 und 12 zueinander gezogen werden, wenn die beiden Wellen 10 und 12 gemeinsam mit den darauf befindlichen Messeinheiten 14, 18 um die Achse 26 gedreht werden, wobei dann der Verlauf des jeweiligen Auftreffpunkts in Abhängigkeit vom Drehwinkel (der wiederum mittels der Inklinometerfunktion bestimmt werden kann) verfolgt und in an sich bekannter Weise ausgewertet wird, um Rückschlüsse auf den vertikalen Versatz, horizontalen Versatz und den Winkelversatz der Wellen 10, 12 zu ermitteln (ein solches Verfahren ist beispielsweise in der EP 1 211 480 A2 oder der WO 98/33039 A1 beschrieben).

Nach Ermittlung der Fehlausrichtung wird in einer bestimmten Winkelposition eine Justierung der Wellen 10, 12 vorgenommen, wobei während der Wellenjustierung gemessen wird, um festzustellen, wann die Fehlausrichtung am besten korrigiert ist.

Typischerweise sind während der Ausrichtungsmessung und während der Justierung der Wellen kontinuierlich in relativer hoher Rate von der Kamera Bilder der Streufläche 34 zu aufzunehmen und auszuwerten, wobei beispielsweise fünf Bilder pro Sekunde erstellt und verarbeitet werden können. Sofern es sich bei der Kamera um ein Smartphone handelt, kann die Bilderstellung und Auswertung beispielsweise in Form einer geeigneten App erfolgen.

Als Alternative zu einer kontinuierlichen Bildaufnahme kann der Aufnahmemodus beispielsweise auch so gewählt werden, dass die Bilderstellung in Abhängigkeit vom aktuellen Inklinationswinkel erfolgt, z.B. immer, wenn sich der Winkel um einen bestimmten Betrag, z.B. 1°, ändert.

Die Ausrichtvorrichtung kann optional ein Bluetooth-Headset umfassen, welches von der mit der Justierung der Wellen befassten Bedienperson während der Justierung getragen wird und welches dazu dient, die aktuell von der Auswerteeinheit 22 der als Smartphone ausgebildeten Kamera 36 ermittelten Versatzwerte drahtlos zu empfangen, um sie der Justierung der Wellen befassten Person akustisch darzubieten. Dies ist insofern vorteilhaft, als es typischerweise während der Justierung für die Bedienperson schwierig ist, das die Anzeige des Smartphones 36 abzulesen. Dabei könnte das Headset auch verwendet werden, um die Bluetooth-Verbindung für eine Sprachsteuerung des Smartphones 36 zu nutzen.

Alternativ könnte von der Bedienperson ein zweites Smartphone oder ein Tablet-Computer verwendet werden, um die Anzeige des als Kamera dienenden Smartphones 36 über eine Bluetooth-Verbindung (z.B. mittels VNC) in einer für die Bedienperson besser ablesbaren Weise darzustellen, wobei mittels Bildschirmberührung das Smartphone 36 auch über das zweite Smartphone oder den Tablet-Computer gesteuert werden könnte, s. auch WO 97/36146.

Typischerweise hat die abgebildete Fläche eine Größe von etwa 40 x 40 mm; dann entspricht ein Pixel etwa 20 µm, wenn die Auflösung der Kamera bei 8 Megapixel (entsprechend einer vertikalen Auflösung von etwa 2500 Pixel) liegt. Wenn eine Kompaktkamera mit beispielsweise 16 Megapixel verwendet wird, kann eine Auflösung von etwa 7 µm erzielt werden.

Grundsätzlich kann auch eine Kamera mit spezieller Optik verwendet werden, oder im Falle eines Smartphones kann eine Lupe vorgeschaltet werden. Die abzubildenden Abmessungen der Streufläche 34 können beispielsweise auch auf 20 x 20 mm bis 30 x 30 mm reduziert werden.

Dabei ist grundsätzlich vorstellbar, dass die Bilder von der Kamera drahtlos (beispielsweise per WLAN) beispielsweise an eine mobile Plattform übertragen werden. Dabei kann beispielsweise eine spezielle SD-Karte verwendet werden.

Gemäß einer Abwandlung der Ausführungsform von Fig. 1 bis 3 kann die Kamera 36 als "freie Kamera" ausgebildet sein, die bezüglich der beiden Messeinheiten 14, 18 frei beweglich ist und beispielsweise zur Erstellung der Aufnahme der Streufläche 34 vom Bediener in der Hand gehalten wird oder auf ein Stativ gesetzt wird. Dabei wird die Kamera entweder im Makrobereich betrieben und bei der Aufnahme entsprechend nahe an die Streufläche 34 positioniert, oder, wo dies nicht möglich oder gewünscht ist, wird die Kamera wird mit Teleobjektiv betrieben, so dass beispielsweise auch Aufnahmen zu einer Entfernung von mehr als 1 m möglich werden.

Grundsätzlich kann die Kamera auch in den Fällen, in welchen sie bei der Aufnahme fest an der ersten Messeinheit 14 montiert ist, so mit der ersten Messeinheit 14 verbunden sein, dass sie nach erfolgter Ausrichtungsmessung bzw. Justierung von der ersten Messeinheit 14 gelöst und anderweitig verwendet werden kann. Dies ist insbesondere dann vorteilhaft, wenn es sich bei der Kamera um ein Smartphone handelt.

Grundsätzlich bietet die Verwendung von Smartphones als Kamera viele Vorteile: So sind solche Geräte sehr flexibel und leistungsfähig bezüglich der Programmierung und Gestaltung der graphischen Benutzeroberfläche; insbesondere sind auch Dinge wie Gestenerkennung, Tastatureinblendung und Lokalisierung möglich. Ferner kann der mit der Ausrichtungsmessung befasste Benutzer ein Gerät verwenden, mit dessen Bedienung er ohnehin grundsätzlich vertraut ist. Außerdem bieten Smartphones viele Schnittstellen, z.B. auch in einer Instandhalterdatenbank; insbesondere sind dabei drahtlose Schnittstellen verfügbar, die für die Anbindung an eine weitere mobile Bedienplattform, ein Headset (mit Echo- und Geräuschunterdrückung), eine Google-Brille, ein Vibrationsgürtel etc., verwendet werden können. Ferner kann das Smartphone während Zeiten, wenn es nicht für Ausrichtungsmessungen verwendet wird, in der üblichen Weise verwendet werden.

Die Messeinheiten 10, 12 können nicht nur zur Wellenausrichtung, sondern, gegebenenfalls in entsprechender Abwandlung, für andere Lageermittlungsverfahren verwendet werden.

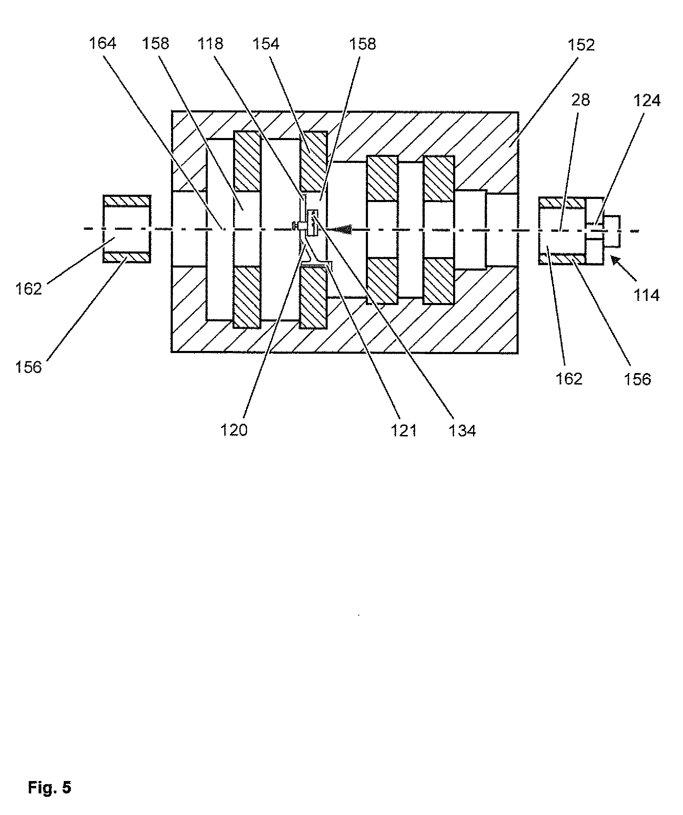

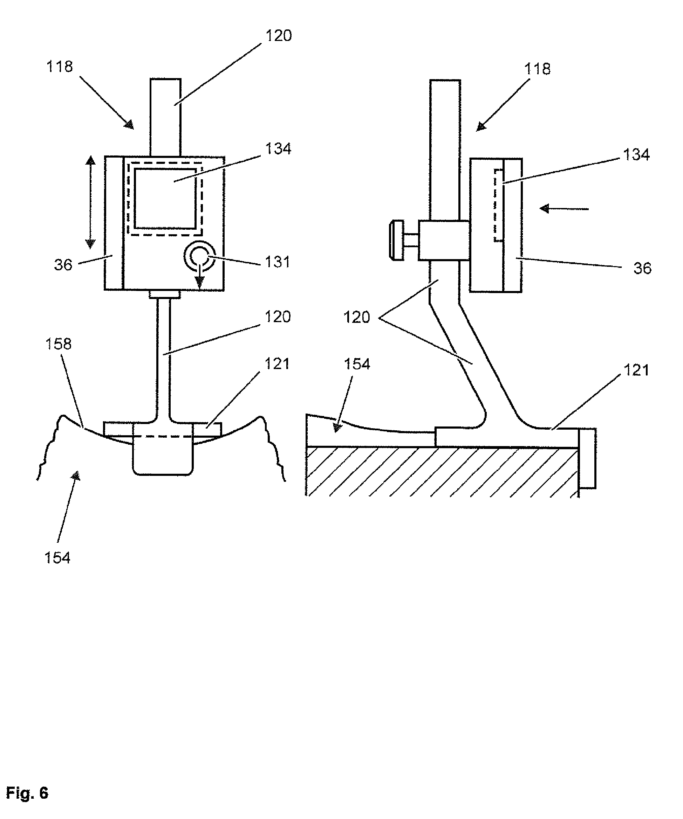

In Fig. 5 und 6 ist ein Beispiel gezeigt, wie eine erste Messeinheit 114 und eine zweite Messeinheit 118 zum Ermitteln der Ausrichtung von Teilen eines Turbinenstators 152, nämlich von Leitradkränzen 154 relativ zu Turbinenrotorlagern 156, die so zu justieren sind, dass die Krümmungsmittelachsen der zylindrischen Wandungen 158 der Mittelöffnungen 160 der Leitradkränze 154 und die Krümmungsmittelachsen der zylindrischen Lagerflächen 162 der Turbinenrotorlager 156 untereinander fluchten. Dazu ist an dem in Fig. 5 rechts zu sehenden Rotorlager 156 die erste Messeinheit 114 so angebracht, dass das von der Lichtquelle 124 erzeugte Lichtstrahlbündel 128 ungefähr parallel zur endgültigen, noch genau einzurichtenden Rotordrehachse 164 durch den von den Öffnungswandungen 158 der Leitradkränze 154 umschlossenen Messraum ausgesendet wird.

Die zweite Messeinheit 118 ist über ein Distanzstück 120 mit einem Fuß 121 verbunden, der an die Innenwandung 138 der Mittelöffnung 160 eines der Leitradkränze 154 so angesetzt ist, dass der Lichtstrahl 128 auf die Streufläche 134 der zweiten Messeinheit 118 trifft. Die zweite Messeinheit 118 kann dabei in ähnlicher Weise wie die zweite Messeinheit von Fig. 1 bis 3 mit seitlich angebrachter Kamera 36 ausgebildet sein, um Bilder der Streufläche 134 zwecks Ermittlung der Lage des Auftreffpunkts PV des Lichtstrahls 128 aufzunehmen. Der Fuß 121 ist zum kippfesten gleitbaren Abstützen an der Wandung 158 vorgesehen, wobei die zweite Messeinheit 118 in Umfangsrichtung verschiebbar ist, um Bilder der Streufläche 134 bei unterschiedlichen Drehwinkeln der zweiten Messeinheit 118 aufzunehmen. Zu diesem Zweck ist der Fuß 121 so ausgebildet, dass er in der jeweiligen Messposition bezüglich der Wandung 158 feststellbar ist, beispielsweise indem er als Magnetfuß ausgebildet ist. Vorzugsweise weist die zweite Messeinheit 118 ein Inklinometer 131 auf, um den Drehwinkel zu ermitteln.

Indem der Auftreffpunkt des Lichtstrahls 128 für mindestens drei unterschiedliche Drehwinkel ermittelt wird, kann die Ausrichtung der Innenwandung 158 bezüglich des Lichtstrahls 128 und damit bezüglich der Bezugsachse der Rotorlager 156 ermittelt werden; ein solches Verfahren ist beispielsweise in der EP 0 543 971 B1 beschrieben.

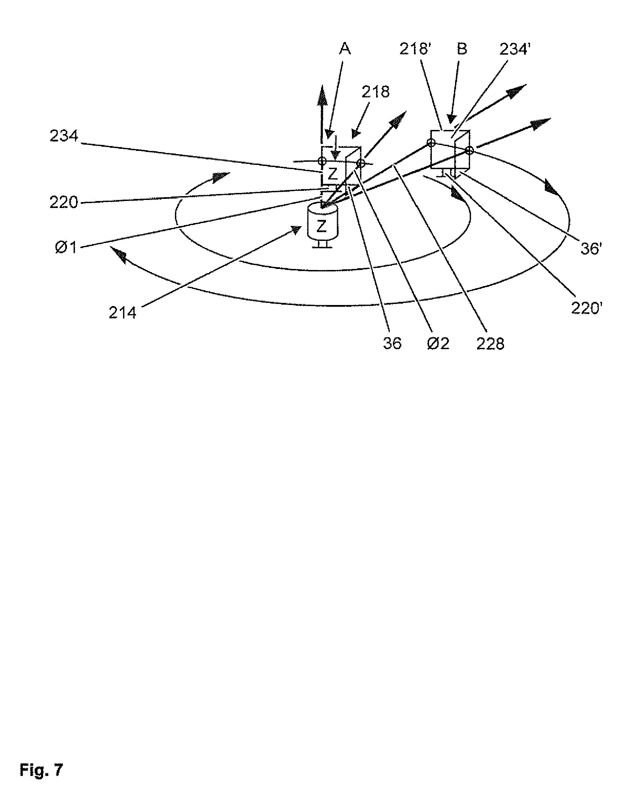

In Fig. 7 ist eine alternative Anwendung einer erfindungsgemäßen Lageertnittlungsvorrichtung gezeigt, bei welcher eine erste Messeinheit 214 und eine zweite Messeinheit 218 zur Niveauvermessung von Messpunkten auf einer zu vermessenden Fläche verwendet werden. Die erste Messeinheit 214 ist dabei so ausgebildet, dass sie einen um eine vertikale Achse in einer horizontalen Ebene rotierenden Lichtstrahl 228 erzeugt, der typischerweise mit konstanter Winkelgeschwindigkeit umläuft und dabei die Streufläche 234 der zweiten Messeinheit 218 periodisch in im Wesentlichen horizontaler Richtung überstreicht. Auch hier kann die zweite Messeinheit 218 in ähnlicher Weise wie die Messeinheit 18 aus Fign. 1 bis 3 oder die Messeinheit 118 aus Fig. 5 mit seitlich angebrachter Kamera 36 ausgebildet sein.

Für eine solche Niveaumessung wird mindestens ein Bild der Streufläche 234 aufgenommen, welches dann hinsichtlich des Auftreffpunkts des Lichtstrahls 228 ausgewertet wird, um einen Niveauunterschied zu früheren Messpositionen zu ermitteln, bei welchen die zweite Messeinheit 218 bzw. der Fuß 220 der Messeinheit 218 an einer anderen Stelle der zu vermessenden Fläche positioniert war (in Fig. 7 ist eine erste Messposition bei A und eine zweite Messposition bei B angedeutet).

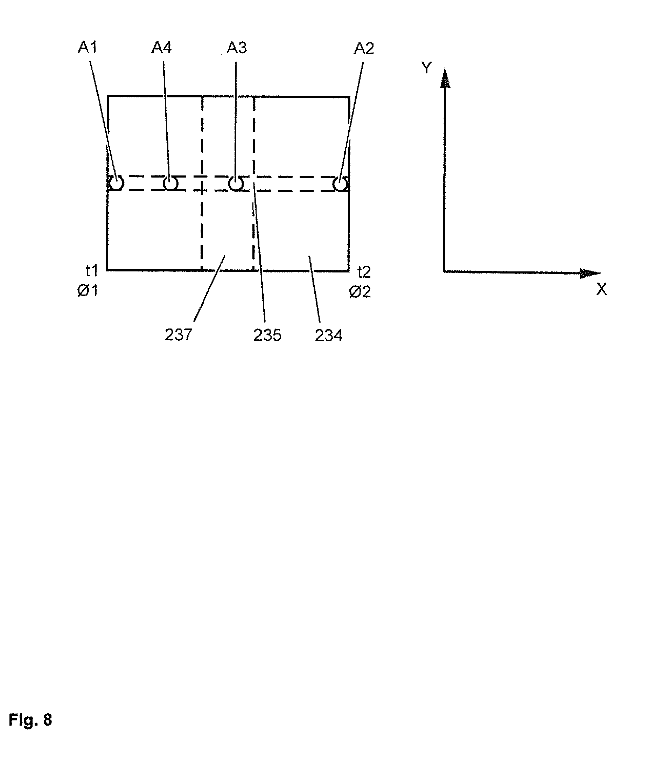

In Fig. 8 ist ein schematisches Beispiel gezeigt, wie der Auftreffpunkt des Lichtstrahls 228 die Streufläche 234 in horizontaler Richtung überstreicht. Dabei ergibt sich zum Zeitpunkt t₁, der einem Drehwinkel φ₁ entspricht, ein Auftreffen des Lichtstrahls 228 an einem Punkt A1 am linken Rand der Streufläche 234, der dann in horizontaler Richtung über die Streufläche 234 in einem Streifen 235 wandert und zum Zeitpunkt t₂, der einem Drehwinkel φ₂ entspricht, an einem Punkt A2 die Streufläche 234 wieder verlässt. Wenn die Rotationsgeschwindigkeit ω des Lichtstrahls 228 gut konstant gehalten wird, ergibt sich eine gute Korrelation zwischen Zeit und Drehwinkel.

Wenn nun die Streufläche 234 mittels der Kamera 236 aufgenommen wird, gibt es verschiedene Möglichkeiten, was auf den Bildern zu sehen ist, und zwar je nach dem Zeitpunkt der Aufnahme und der Belichtungsdauer. Wenn die Belichtungsdauer im Verhältnis zur Rotationsgeschwindigkeit ω relativ lang ist, wird auf dem Bild im Wesentlichen ein horizontaler Strich zu erkennen sein, dessen Länge, sofern er nicht im Wesentlichen die ganze Bildbreite überstreicht, von der Belichtungszeit und der Rotationsgeschwindigkeit ω abhängt. Für kürzere Belichtungszeiten ergibt sich eher ein Punkt bzw. ein Kreis oder eine horizontale Ellipse.

Im Folgenden werden einige mögliche Aufnahmemodi beschrieben.

Gemäß einer ersten Variante kann die Kamera 36 in einem (Quasi-)Videomodus betrieben werden, wobei sie in regelmäßigem zeitlichem Abstand, d.h. mit einer bestimmten Bildrate, ein Bild der Streufläche 234 aufnimmt, und wobei aber dann lediglich Bilder ausgewertet werden, bei denen der Auftreffpunkt des Lichtstrahls 228 in einem vorgegebenen Bereich der Streufläche 234 liegt (dieser Bereich ist in Fig. 8 mit 237 angedeutet). Im Beispiel von Fig. 8 ist diese Bedingung für den Auftreffpunkt A3 erfüllt, nicht jedoch für den Auftreffpunkt A4. Der vorgegebene Bereich 237 liegt dabei typischerweise in etwa in der Mitte der x-Richtung der Streufläche 234. Bei Bildern, bei welchen der Auftreffpunkt im Bereich 237 liegt, wird dann die y-Koordinate des Auftreffpunkts ausgewertet, um das vertikale Niveau der Messposition zu erhalten. Eine solche Auswertung der y-Koordinate des Auftreffpunkts ist auch dann möglich, wenn der Auftreffpunkt im Bild in horizontaler Richtung verschmiert ist, wobei man hier dann zusätzlich noch einen Nivellierwinkel der Streufläche 234 erhalten kann, die der Verkippung des "Strichs" bzgl. der Horizontalen entspricht.

Bei einem alternativen Aufnahmemodus befindet sich die Kamera nicht in einem Videomodus, sondern weist eine Triggerfunktion auf, welche die Kamera 36 veranlasst, ein Bild der Streufläche 234 nur dann aufzunehmen, wenn der Auftreffpunkt des Lichtstrahls 228 in einem vorgegebenen Bereich, beispielsweise dem Bereich 237, der Streufläche 234 liegt. Auf diese Weise kann der Aufwand einer gezielten Auswahl eines bestimmten Bilds nach dem Aufnehmen der Bilder, wie dies bei dem ersten beschriebenen Aufnahmemodus der Fall ist, vermieden werden.

Ferner kann die Kamera 36 mit der ersten Messeinheit 214 mittels einer drahtlosen Datenverbindung (z.B. einer Bluetooth-Verbindung) verbunden sein, um Daten bezüglich Drehfrequenz und Drehwinkel des Lichtstrahls 228 von der ersten Messeinheit 218 zur Kamera 36 zu übertragen, wobei die Kamera gegebenenfalls über diese drahtlose Datenverbindung auch die Drehfrequenz des Lichtstrahls 228 steuern kann. Eine solche Datenverbindung kann gemäß einem ersten Beispiel dahingehend ausgenutzt werden, dass die Kamera Bilder der Streufläche 234 mit fester Bildrate (d.h. mit einem (Quasi-)Videomodus) aufnimmt und die Drehfrequenz über die Datenverbindung von der Kamera 36 so eingestellt wird, dass zwei der aufgenommenen Bilder (typischerweise zwei nacheinander aufgenommene Bilder) einen zueinander horizontal möglichst weit versetzten Auftreffpunkt des Lichtstrahls 228 auf der Streufläche 234 zeigen (dies wäre in Fig. 8 beispielsweise für Bilder mit den Auftreffpunkten A1 bzw. A2 erfüllt). Dabei wird der horizontale Abstand der beiden Auftreffpunkte ermittelt, und aus der Bildrate, der Drehfrequenz und dem horizontalen Abstand der beiden Auftreffpunkte kann der (radiale) Abstand der zweiten Messeinheit 218 von der ersten Messeinheit 214 berechnet werden. Dabei kann, falls der Auftreffpunkt verschmiert ist, jeweils eine Ausgleichsgerade berechnet werden, und durch Schwerpunktberechnung kann der horizontale Abstand der Auftreffpunkte bestimmt werden.

Wenn der Abstand der zweiten Messeinheit 218 von der ersten Messeinheit 214 wesentlich größer als der horizontale Abstand der beiden Auftreffpunkte ist, entspricht der horizontale Abstand der Auftreffpunkte ungefähr der Bogenlänge; der Drehwinkel φ kann aus der vorgegebenen Drehfrequenz ω des Lichtstrahls 228 und dem Inversen der Bildrate der Kamera 36 genau bestimmt werden, so dass dann auch der Radius, d.h. der Abstand zwischen Lichtquelle 224 und Streufläche 234, ermittelt werden kann. Sofern der Drehwinkel φ von der ersten Messeinheit 214 an die Kamera 36 übermittelt wird, ist auch die relative Winkelposition der Streufläche 234 bekannt, so dass sowohl die Winkelposition der Messposition als auch deren Abstand von der ersten Messeinheit 214, zusammen mit dem Niveau der Messposition, ermittelt werden kann.

Bei einer weiteren alternativen Ausgestaltung kann durch geeignete Wahl von Belichtungszeit und Drehfrequenz ein Bild mit einem verschmierten Auftreffpunkt aufgenommen werden, wobei die horizontale Länge der Verschmierung ermittelt und daraus anhand der Belichtungszeit des Bilds und der Drehfrequenz des Lichtstrahls 228 der Abstand zwischen der zweiten Messeinheit 218 und der ersten Messeinheit 214 berechnet wird.

Bei einer anderen Abwandlung der Vorrichtung von Fig. 1 bis 3 ist die Vorrichtung von Fig. 1 bis 3 für die Ermittlung der Geradheit eines Körpers ausgebildet. Dabei weisen die Messeinheiten 18, 22 statt der Elemente 20 zum Ansetzen die jeweilige Umfangsfläche der Wellen 10, 14 Elemente zum flächigen formschlüssigen Ansetzen an eine zu vermessende Fläche des Körpers auf. Geradheitsabweichungen der zu vermessenden Fläche führen dabei zu Verkippung bzw. Verdrehung der Messeinheiten 18, 22 relativ zueinander, was zu einer entsprechenden Verschiebung des Auftreffpunkts des Lichststrahls 28 auf der Streufläche 34 führt, woraus die entsprechenden Geradheitsabweichungen der zu vermessenden Fläche ermittelt werden können. Die Messeinheiten können über die zu vermessende Fläche verschoben werden, um die ganze Fläche auszumessen.

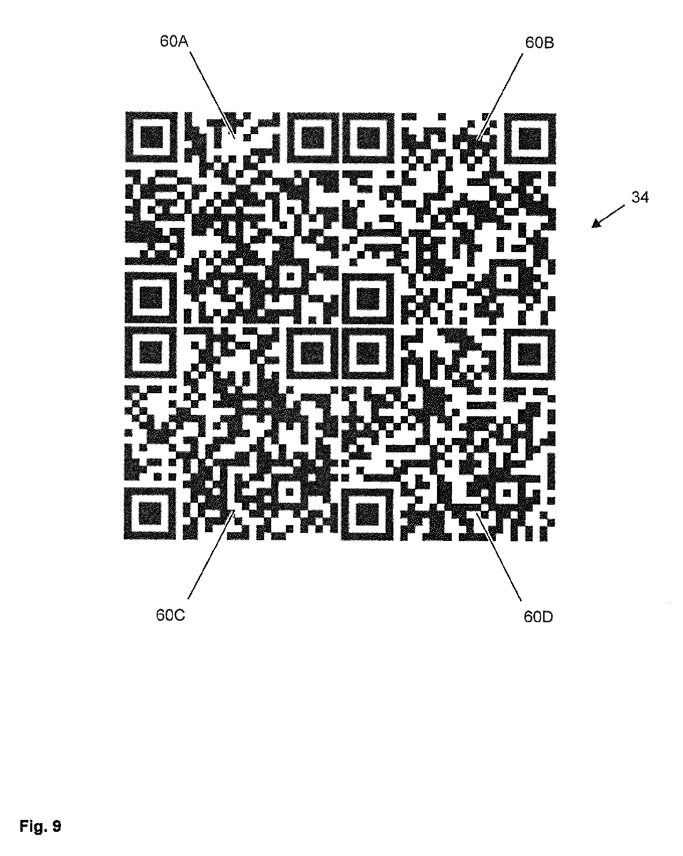

Gemäß einer Ausführungsform der Erfindung kann die Streufläche mit mehreren, typischerweise nach Art eines Rasters über die Streufläche verteilten, zweidimensionalen optischen Codes, z.B. eines QR-Codes, versehen sein, welche auf die Streufläche aufgedruckt sind und zur Codierung von Informationen/Daten bzgl. der Streufläche bzw. der mit der Streufläche versehenen Messeinheit dienen, beispielsweise Seriennummer der Messeinheit, Abmessungen der Streufläche in x- und y-Richtung (z.B. in mm), Korrekturfaktoren bzgl. der Genauigkeit bzw. Fehlern des beim Aufdruck der Streufläche verwendeten Druckers (z.B. Betrag der Streckung oder Stauchung in x- und y-Richtung), Anzahl der Codes auf der Streufläche, Position des jeweiligen Codes im Raster (Nummer der Zeile, Nummer der Spalte), sowie Abstand der des jeweiligen Codes vom Ursprung des Koordinatensystems der Streufläche (z.B. in µm). Die einzelnen Codes können dabei beispielsweise so angeordnet sein, dass sie aneinander angrenzen, um die gesamte Streufläche abzudecken, s. z.B. Fig. 9, wo vier Codes 60A, 60B, 60C, 60D gezeigt sind. Die Anzahl und Auflösung der Codes sollte entsprechend der Auflösung des Druckers und der Kamera optimiert werden. Statt eines QR-Codes können grundsätzlich auch andere proprietäre graphische Codes verwendet werden.

Das Vorsehen von graphischen Codes auf der Streufläche hat folgende Vorteile: Es muss nicht die gesamte Reflektorfläche mit Sicherheitsrand fotograpfiert werden, was eine Erleichterung für den Anwender bedeutet. Die Codes können zwecks Erstellung eines Sollbilds rekonstruiert werden, so dass genügend Punkte für die Linearisierung des Bildes des Streufläche (innere und äußere Parameter) vorhanden sind. Anhand von bestimmten Marken können die Codes auf der Streufläche als soclhe identifiziert werden. Es kann eine höhere Genauigkeit bei der Ermittlung der Auftreffposition erzielt werden. Die Streufläche kann bzgl. der Genauigkeit des beim Aufdrucken der Streufläche verwendeten Druckers korrigiert werden.

## Patentansprüche

1. Vorrichtung zum Ermitteln der Lage eines ersten mechanischen Elements (10, 156) und eines zweiten mechanischen Elements (12, 154) zueinander, mit einer ersten Messeinheit (14, 114, 214) zum Ansetzen an das erste mechanische Element, einer zweiten Messeinheit (18, 118, 218) zum Ansetzen an das zweite mechanische Element, sowie einer Auswerteeinheit (22),
wobei die erste Messeinheit Mittel (24, 124, 224) zum Erzeugen eines Lichtstrahlbündels (28, 128, 228) aufweist,
wobei die zweite Messeinheit eine Streufläche (34, 134, 234) zum Streuen von auf die Streufläche auftreffendem Licht, eine Kamera (36) sowie Mittel aufweist, um die Streufläche auf die Kamera abzubilden,
wobei die Streufläche der ersten Messeinheit zugewandt ist, wenn die Messeinheiten an das jeweilige mechanische Element angesetzt sind, um von dem Lichtstrahlbündel getroffen zu werden,
wobei die Auswerteeinheit ausgebildet ist, um aus von der Kamera gelieferten Bilddaten die Auftreffposition des von der ersten Messeinheit abgegebenen Lichtstrahlbündels auf der Streufläche und daraus die Lage des ersten mechanischen Elements und des zweiten mechanischen Elements zueinander zu ermitteln,
und wobei die Kamera auf die der ersten Messeinheit zugewandte Seite der Streufläche gerichtet ist.

2. Vorrichtung gemäß Anspruch 1, **dadurch gekennzeichnet, dass** die Kamera (36) seitlich versetzt bzgl. der Streufläche (34, 134, 234) angeord-net ist oder dass die Kamera (36) seitlich versetzt und verkippt bzgl. der Streufläche (34, 134, 234) angeordnet ist.

3. Vorrichtung gemäß einem der vorhergehenden Ansprüche, **dadurch gekennzeichnet, dass** die zweite Messeinheit (18, 118, 218) Mittel zur lösbaren Befestigung der Kamera (36) aufweist und/oder dass es sich bei den Mitteln zum Abbilden der Streufläche (34, 134, 234) auf die Kamera (36) um ein Objektiv mit fester Brennweite handelt und/oder dass die Kamera (36) Mittel (23) zum Beleuchten der Streufläche (34, 134, 234) aufweist und/oder dass die Kamera (36) an einer eine Streulichtblende bildenden optischen Abschirmung montiert ist.

4. Vorrichtung zum Ermitteln der Lage eines ersten mechanischen Elements (10, 156) und eines zweiten mechanischen Elements (12, 154) zueinander, mit einer ersten Messeinheit (14, 114, 214) zum Ansetzen an das erste mechanische Element, einer zweiten Messeinheit (18, 118, 218) zum Ansetzen an das zweite mechanische Element, einer Kamera (36) sowie einer Auswerteeinheit (22),
wobei die erste Messeinheit Mittel (24, 124, 224) zum Erzeugen eines Lichtstrahlbündels (28, 128, 228) aufweist,
wobei die zweite Messeinheit eine Streufläche (34, 134, 234) zum Streuen von auf die Streufläche auftreffendem Licht aufweist,
wobei die Streufläche der ersten Messeinheit zugewandt ist, wenn die Messeinheiten an das jeweilige mechanische Element angesetzt sind, um von dem Lichtstrahlbündel getroffen zu werden,
wobei die Kamera bzgl. der beiden Messeinheiten frei beweglich ist und Mittel aufweist, um die Streufläche auf die Kamera abzubilden,
wobei die Auswerteeinheit ausgebildet ist, um aus von der Kamera gelieferten Bilddaten die Auftreffposition des von der ersten Messeinheit abgegebenen Lichtstrahlbündels auf der Streufläche und daraus die Lage des ersten mechanischen Elements und des zweiten mechanischen Elements zueinander zu ermitteln,
und wobei die Kamera ausgebildet ist, um auf die der ersten Messeinheit zugewandte Seite der Streufläche gerichtet zu werden.

5. Vorrichtung gemäß einem der vorhergehenden Ansprüche, **dadurch gekennzeichnet, dass** die Auswerteeinheit (22) ausgebildet ist, um die von der Kamera (36) gelieferten Bilddaten bzgl. einer Verkippung zur Streufläche (34, 134, 234) zu entzerren und/oder dass die Streufläche (34, 134, 234) im wesentlichen eben ist und/oder dass die zweite Messeinheit (18, 118, 218) eine Hintergrundbeleuchtung (25) für die Streufläche (34, 134, 234) aufweist und/oder dass die Kamera (36) als Smartphone ausgebildet ist und/oder dass es sich bei dem ersten mechanischen Element um eine erste Welle (10) und bei dem zweiten mechanischen Element um eine zweite Welle (12) handelt, wobei die erste Messeinheit (14) zum Ansetzen an eine Umfangsfläche der ersten Welle und die zweite Messeinheit (18) zum Ansetzen an eine Umfangsfläche der zweiten Welle ausgebildet sind.

6. Vorrichtung gemäß Anspruch 5, **dadurch gekennzeichnet, dass** die Auswerteeinheit (22) ausgebildet ist, um aus in unterschiedlichen Drehwinkelpositionen der Wellen (10, 12) aufgenommenen Bilddaten Winkelversatz und vertikalen bzw. horizontalen Versatz der Wellen zu ermitteln und/oder dass die Kamera (36) ein Inklinometer (29) aufweist.

7. Vorrichtung gemäß einem der Ansprüche 1 bis 5, **dadurch gekennzeichnet, dass** die Mittel (214) zum Erzeugen des Lichtstrahlbündels (228) ausgebildet sind, um das Lichtstrahlbündel um eine vertikale Achse (z) rotierend in einer horizontalen Ebene zu erzeugen oder dass die erste (14, 114, 214) und/oder zweite Messeinheit (18, 118, 218) zur Verschiebung entlang einer Kante oder Fläche des ersten bzw. zweiten mechanischen Elements ausgebildet sind, und wobei die Auswerteeinheit ausgebildet ist, um die Geradheit der Kante bzw. Fläche des ersten bzw. zweiten mechanischen Elements aus in unterschiedlichen Positionen der Messeinheiten entlang der Kante bzw. Fläche gewonnenen Bilddaten zu ermitteln oder dass das zweite mechanische Element eine konkave zylindrisch gerümmte Körperfläche (158) aufweist, wobei die zweite Messeinheit (218) zur Verschiebung in Umfangsrichtung der Körperfläche zwecks Gewinnung von Bilddaten in unterschiedlichen Drehwinkelpositionen der zweiten Messeinheit ausgebildet ist, und wobei die Auswerteeinheit (229) ausgebildet ist, um den Bilddaten Winkelversatz und vertikalen bzw. horizontalen Versatz der Körperfläche bzgl. einer durch das Lichtstrahlbündel (228) vorgegebenen Referenzrichtung zu ermitteln.

8. Vorrichtung gemäß Anspruch 7, **dadurch gekennzeichnet, dass** die Mittel (214) zum Erzeugen des Lichtstrahlbündels (228) ausgebildet sind, um das Lichtstrahlbündel um eine vertikale Achse (z) rotierend in einer horizontalen Ebene zu erzeugen und die Auswerteeinheit (22) ausgebildet ist, um aus den Bilddaten einen vertikalen Niveauunterschied zwischen dem ersten und dem zweiten mechanischen Element zu ermitteln.

9. Vorrichtung gemäß einem der vorhergehenden Ansprüche, **dadurch gekennzeichnet, dass** die Streufläche (34, 134, 234) nicht-transparent für das Lichtstrahlenbündel (28, 128, 228) ausgebildet ist und/oder dass die Streufläche (34, 134, 234) mit Messmarken (50) versehen ist und/oder dass die Streufläche (34, 134, 234) mit mehreren über die Streufläche verteilten graphischen Codes (60A, 60B, 60C, 60D) zur Codierung von Daten betreffend die Streufläche und/oder die mit der Streufläche versehenen Messeinheit versehen ist.

10. Verfahren zum Ermitteln der Lage eines ersten mechanischen Elements (10, 156) und eines zweiten mechanischen Elements (12, 154) zueinander, wobei
eine erste Messeinheit (14, 114, 214) an das erste mechanische Element angesetzt wird und eine zweite Messeinheit (18, 118, 218) an das zweite mechanische Element gesetzt wird,
mittels der ersten Messeinheit ein Lichtstrahlbündel (28, 128, 228) erzeugt und auf eine Streufläche oder eine der ersten Messeinheit zugewandte Streufläche (34, 134, 234) der zweiten Messeinheit gerichtet wird,
eine bzgl. der beiden Messeinheiten frei bewegliche Kamera (36) in Position gebracht wird und mindestens ein Bild der Streufläche aufgenommen wird oder mittels einer an der zweiten Messeinheit angebrachten und auf die Streufläche gerichteten Kamera (36) mindestens ein Bild der Streufläche aufgenommen wird, und
das mindestens eine Bild ausgewertet wird, um die Auftreffposition (PV, A1, A2, A3; A4) des an der Reflektoranordnung reflektierten Lichtstrahlbündels oder des Lichtstrahlbündels auf der Streufläche und daraus die Lage des ersten mechanischen Elements und des zweiten mechanischen Elements zueinander zu ermitteln.

11. Verfahren gemäß Anspruch 10, **dadurch gekennzeichnet, dass** die Kamera (36) auf die der ersten Messeinheit (14, 114, 214) zugewandte Seite der Streufläche (34, 134, 234) gerichtet wird und/oder dass die Streufläche (34, 134, 234) als Mattscheibe ausgebildet ist und die Kamera (36) auf die von der ersten Messeinheit (14, 114, 214) abgewandte Seite der Mattscheibe gerichtet wird.

12. Verfahren gemäß Anspruch 10, **dadurch gekennzeichnet, dass** das Lichtstrahlbündel (228) um eine vertikale Achse (z) rotierend in einer horizontalen Ebene erzeugt wird und aus den Bilddaten ein vertikaler Niveauunterschied zwischen dem ersten und dem zweiten mechanischen Element ermittelt wird.

13. Verfahren gemäß Anspruch 12, **dadurch gekennzeichnet, dass** die Kamera (36) in einem Modus betrieben wird, in welchem in regelmäßigem zeitlichem Abstand ein Bild der Streufläche aufgenommen wird, wobei aber lediglich Bilder ausgewertet werden, bei denen der Auftreffpunkt (A3) des Lichtstrahlbündels in einem vorgegebenen Bereich (237) der Streufläche liegt oder dass die Kamera (36) eine Triggerfunktion aufweist, welche die Kamera veranlasst, ein Bild der Streufläche (234) jeweils nur dann aufzunehmen, wenn der Auftreffpunkt (A3) des Lichtstrahlbündels (228) in einem vorgegebenen Bereich (237) der Streufläche liegt.

14. Verfahren gemäß einem der Ansprüche 12 oder 13, **dadurch gekennzeichnet, dass** die Kamera (36) mit der ersten Messeinheit (214) mittels einer drahtlosen Datenverbindung verbunden ist, um Daten bezüglich Drehfrequenz und Drehwinkel von der ersten Messeinheit zur Kamera (36) zu übertragen.

15. Verfahren gemäß Anspruch 14, **dadurch gekennzeichnet, dass** die Kamera (36) die Drehfrequenz des Lichtstrahlbündels über die Datenverbindung steuern kann oder dass aus einem Bild der Kamera (36), bei welchem der Auftreffpunkt des Lichtstrahlbündels (228) auf der Streufläche in horizontal verschmierter Weise (235) dargestellt ist, die horizontale Länge der Verschmierung ermittelt und daraus anhand der Belichtungszeit des Bilds und der Drehfrequenz des Lichtstrahlbündels der Abstand der zweiten Messeinheit (218) von der ersten Messeinheit (214) berechnet wird oder dass die Kamera (36) die Drehfrequenz des Lichtstrahlbündels über die Datenverbindung steuern kann und die Kamera (36) Bilder der Streufläche (234) mit fester Bildrate aufnimmt und die Drehfrequenz der Datenverbindung von der Kamera so eingestellt wird, dass zwei der Bilder einen zueinander horizontal möglichst weit versetzten Auftreffpunkt (A1, A2) des Lichtstrahlbündels auf der Streufläche zeigen, wobei der horizontale Abstand der beiden Auftreffpunkte ermittelt wird, und wobei aus der Bildrate, der Drehfrequenz des Lichtstrahlbündels und dem horizontalen Abstand der beiden Auftreffpunkte der Abstand der zweiten Messeinheit von der ersten Messeinheit berechnet wird.
